Europäisches Patentamt

European Patent Office

Office européen des brevets

(11) Veröffentlichungsnummer: **0 234 332**
**A1**

## (12) EUROPÄISCHE PATENTANMELDUNG

(21) Anmeldenummer: **87101324.9**

(22) Anmeldetag: **31.01.87**

(51) Int. Cl.$^3$: **G 01 F 13/00**

(30) Priorität: **21.02.86 CH 696/86**

(43) Veröffentlichungstag der Anmeldung:
**02.09.87 Patentblatt 87/36**

(84) Benannte Vertragsstaaten:
**AT BE CH DE FR GB IT LI NL SE**

(71) Anmelder: **CONTRAVES AG**
**Schaffhauserstrasse 580**
**CH-8052 Zürich(CH)**

(72) Erfinder: **Kaufmann, Klaus**
**Dorfstrasse 7**
**CH-6331 Hünenberg(CH)**

(54) **Vorrichtung für die dosierte Zugabe eines rieselfähigen Feststoffes.**

(57) Die Vorrichtung (50) für die dosierte Zugabe eines rieselfähigen Feststoffes (40) zu den Behälter eines Laborreaktors umfasst im wesentlichen einen Behälter (10) mit einer koaxial darin angeordneten, elektromotorisch angetriebenen Welle (17).

An dem einen Ende der Welle (17) ist ein mit einem Förderteil (22) und einer Drehblende (30) wirkverbundenes Verteilerorgan (20) angeordnet, wobei die Teile (20, 22, 30) in bezug auf eine drehfeste Bodenplatte (35) um die Behälterachse derart drehbar sind, dass für die dosierte Abgabe des Feststoffes (40) in der Bodenplatte (35) und der Drehblende (30) angeordnete Austrittsöffnungen (37, 38 und 31, 33) im wesentlichen deckungsgleich sind.

FIG. 1

EP 0 234 332 A1

Vorrichtung für die dosierte Zugabe eines rieselfähigen
Feststoffes

Die Erfindung bezieht sich auf eine Vorrichtung für die Zugabe von Feststoffen, insbesondere für die dosierte Zugabe rieselfähiger Feststoffe in einen Laborreaktor, bestehend aus einem Behälter, einem koaxial darin angeordneten Verteilerorgan, das mit einem Förderteil dicht oberhalb einer mit einer Austrittsöffnung versehenen Bodenplatte angeordnet und mit einer Antriebswelle wirkverbunden ist.

Aus der CH-PS 633 884 ist eine Dosiervorrichtung der genannten Art bekannt, bei welcher der in den Behälter eingefüllte Feststoff auf das mit der motorisch angetriebenen Welle wirkverbundene, kegelförmige Verteilerorgan, von dort durch die im Verteilerorgan vorgesehene Ausnehmung auf die Bodenplatte fällt von dem spiralförmigen Förderteil erfasst zu der in der Bodenplatte vorgesehenen Austrittsöffnung transportiert wird und von dort in den Laborreaktor-Behälter fällt.
Bei dieser Vorrichtung besteht die Möglichkeit, dass beim Einfüllen der durch die Ausnehmung des Verteilerorgans auf die Bodenplatte fallende, rieselfähige Feststoff sich selbsttätig bis zur Austrittsöffnung bewegt und dabei, ohne jegliche Drehbewegung des Förderteils, eine vorzeitige Teilentleerung entsteht, was zu unerwünschten und unkontrollierbaren Feststoff-Zugaben führen kann.

Der Erfindung liegt die Aufgabe zugrunde, eine Feststoff-Dosiervorrichtung der vorstehend beschriebenen Art dahingehend zu verbessern, dass mit einfachen, räumlich gedrängten Mitteln beim Einfüllen des Feststoffes in den Behälter eine unerwünschte, vorzeitige Teilentleerung verhindert und somit eine kontrollierbare, exakte Dosierung gewährleistet ist.

Die Aufgabe wird dadurch gelöst, dass zwischen der Bodenplatte und dem Förderteil eine mit dem Verteilerorgan drehfest gekoppelte Drehblende angeordnet ist, dass die Bodenplatte mindestens eine Austrittsöffnung und die Drehblende mindestens eine in der Schliessstellung versetzt dazu angeordnete Austrittsöffnung aufweist, wobei die Drehblende in bezug zu der Bodenplatte derart drehbar ist, dass für den Durchtritt des Feststoffes die Austrittsöffnungen in der Offenstellung im wesentlichen deckungsgleich sind.

Die Erfindung wird nachstehend in Verbindung mit der Zeichnung näher beschrieben.
Es zeigt:
Fig.1 eine in Schnittansicht dargestellte Dosier-Vorrichtung, und
Fig.2 das teilweise im Schnitt und perspektivisch dargestellte untere Teilstück der Dosier-Vorrichtung gemäss Fig.1 in demontiertem Zustand.

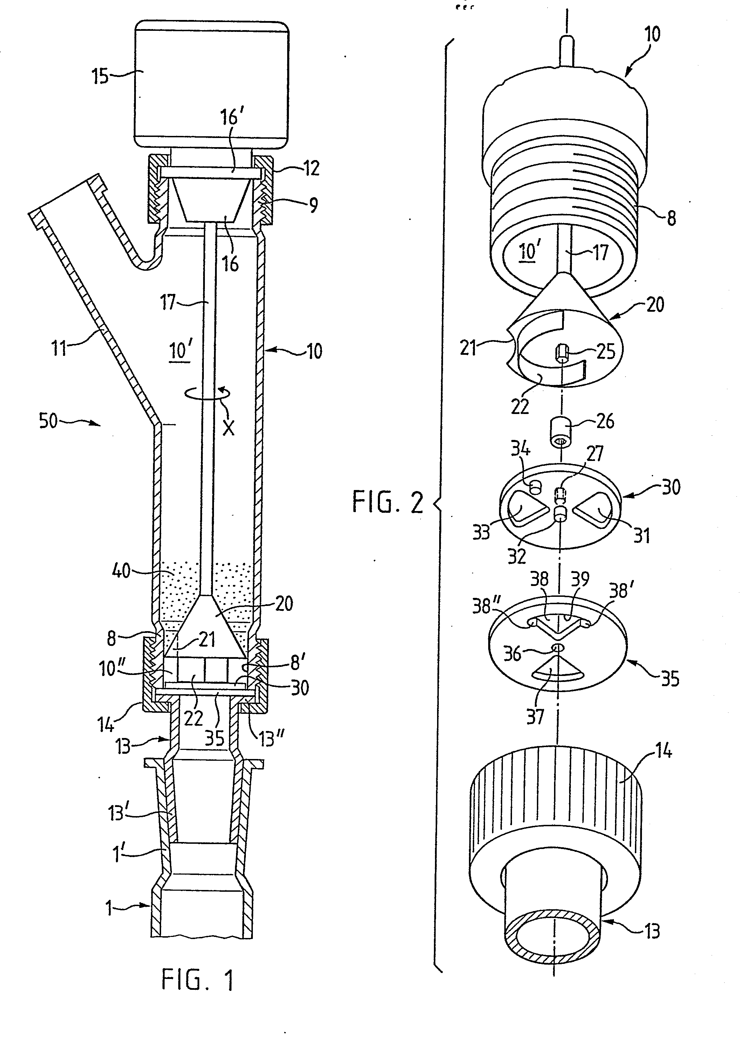

In Fig.1 ist in Schnittansicht eine mit 50 bezeichnete Dosier-Vorrichtung dargestellt, welche im wesentlichen einen Behälter 10 mit seitlich angeformten Einfüllstutzen 11, einen schematisch dargestellten Motor 15, ein durch eine Welle 17 mit dem Motor 15 in Wirkverbindung stehendes Verteilerorgan 20 sowie ein Aufsatzteil 13 umfasst. Als Motor 15 ist vorzugsweise ein Elektromotor mit einer Wegmesseinrichtung oder ein Schrittmotor vorgesehen.

Der im oberen, abgesetzt ausgebildeten Bereich 9 des Behälters 10 angeordnete Motor 15 ist mittels einem schematisch dargestellten Kupplungsteil 16 mit der in Pfeilrichtung X angetriebenen Welle 17 wirkverbunden. Das mit dem Motor 15 eine Baueinheit bildende Kupplungsteil 16 liegt mit einem Auflagering 16' auf dem Behälter 10, wobei die Teile 15,16 durch eine erste Ueberwurfmutter 12 in nicht näher dargestellter Weise, zum Beispiel durch eine Schraubverbindung, lösbar am oberen Teilstück 9 des Behälters 10 befestigt sind.

Am unteren, ebenfalls abgesetzt ausgebildeten Teilstück 8 des Behälters 10 ist mittels einer zweiten Ueberwurfmutter 14 das durch einen Auflagering 13" von der Ueberwurfmutter 14 gehaltene Aufsatzteil 13 lösbar befestigt. Das Aufsatzteil 13 ist mit einem konischen Teilstück 13' versehen, welches in ein entsprechend konisch ausgebildetes Teilstück 1' eines Anschlusskonusses 1 eingesetzt ist. Der Anschlusskonus 1 bildet im wesentlichen das Aufsatzteil eines nicht näher dargestellten Behälters für die Durchführung chemischer Reaktionen in einem nicht dargestellten Laborreaktor.

Im unteren Teilstück 8 des Behälters 10 ist koaxial das mit der Welle 17 drehfest wirkverbundene Verteilerorgan 20 angeordnet und an der Innenwand 8' geführt. An der dem Aufsatzteil 13 beziehungsweise dem Auflagering 13" zugewandten Seite ist an dem Verteilerorgan 20 ein schneckenartig beziehungsweise spiralförmig gebogenes
Förderteil 22 angeordnet und befestigt. Zwischen dem
Förderteil 22 und dem Auflagering 13" des Aufsatzteils
13 sind zwei scheibenartig ausgebildete und in Fig.1
schematisch dargestellte Elemente angeordnet, wovon das
eine als Drehblende 30 und das andere als Bodenplatte 35
ausgebildet ist. Die Drehblende 30 ist an der Innenwand
8' des Behälterteilstücks 8 geführt und mit dem Verteilerorgan 20 wirkverbunden. Die zwischen dem unteren Rand
des Behälterteilstücks 8 und dem Auflagering 13" angeordnete Bodenplatte 35 ist in nicht näher dargestellter
Weise, z.B. durch Klemmwirkung der Teile 14 und 8 gegen
Verdrehung gesichert.

In Fig.2 ist der untere Bereich der Dosier-Vorrichtung
50 in demontiertem Zustand dargestellt, und man erkennt
das untere Teilstück 8 des Behälters 10, ein Teilstück
der Welle 17 mit dem Verteilerorgan 20, die Drehblende
30, die Bodenplatte 35 sowie das als Einheit dargestellte Aufsatzteil 13 mit der Ueberwurfmutter 14.
Das als Konuskörper ausgebildete und mit der Welle 17
drehfest wirkverbundene Verteilerorgan 20 hat eine seitlich angeordnete Ausnehmung 21, das an der Unterseite
angeordnete Förderteil 22 sowie einen vorzugsweise als
Sechskant ausgebildete Kupplungszapfen 25.
Die Drehblende 30 hat auf der dem Verteilerorgan 20
zugewandten Seite einen Kupplungszapfen 27 und auf der
der Bodenplatte 35 zugewandten Seite einen Führungszapfen 34 sowie einen Zentrierzapfen 32.
In der Drehblende 30 sind zwei versetzt        zueinander angeordnete Austrittsöffnungen 31,33 vorgesehen,
welche im wesentlichen kreisausschnittartig ausgebildet
sind. Die Bodenpatte 35 hat eine zentrale Durchgangsbohrung 36 sowie zwei versetzt zueinander angeordnete, kreisausschnittartig ausgebildete Austrittsöffnungen 37,38. Die eine Austrittsöffnung 38 ist im äusseren Bereich mit dem Führungszapfen 34 der Drehblende 30 entsprechend ausgebildeten Ausnehmungen 38',38" versehen.

In zusammengebautem Zustand der Teile 20,30 und 35 ist die Drehblende 30 mit dem Zapfen 27 durch ein Kupplungsstück 26 mit dem Zapfen 25 des Verteilerorgans 20 drehfest wirkverbunden. Auf der anderen Seite ist die Drehblende 30 durch den in die Bohrung 36 der Bodenplatte 35 eingreifenden Zapfen 32 sowie durch den in die eine Austrittsöffnung 38 eingreifenden und an der Peripherie 39 geführten Zapfen 34 zentrisch geführt. Der Zapfen 34 dient als Anschlag, durch welchen im wesentlichen die deckungsgleiche Position der Oeffnungen 31,33 der Drehblende 30 mit den Oeffnungen 37,38 der Bodenplatte 35 gewährleistet wird.

Die Wirkungsweise der Dosier-Vorrichtung 50 wird nachstehend beschrieben:
Ausgehend von der Grundstellung, in welcher die Oeffnungen 31,33 der Drehblende 30 versetzt zu den Oeffnungen 37,38 der Bodenplatte 35 angeordnet sind (Schliessstellung), wird in an sich bekannter Weise der Feststoff 40, im dargestellten Beispiel (Fig.1) durch den Einfüllstutzen 11, in den Innenraum 10' des Behälters 10 eingefüllt. Hierbei gelangt ein Teil des Feststoffes 40 durch die im Verteilerorgan 20 vorgesehene Ausnehmung 21 in den mit 10" bezeichneten Zwischenraum. Der Zwischenraum 10" wird im wesentlichen durch die kreisförmige Oberseite der Drehblende 30 und durch die im Abstand dazu angeordnete kreisförmige Unterseite des Verteilerorgans 20 gebildet.

Beim Start des Motors 15 wird die Welle 17, das Verteilerorgan 20 mit dem Förderteil 22 sowie die Drehblende 30 um die nicht näher bezeichnete Behälterachse um einen bestimmten Winkel in bezug auf die feststehende Bodenplatte 35 verdreht. Hierbei wird die Oeffnung 31 über die Oeffnung 37 und die Oeffnung 33 über die Oeffnung 38 geschoben und gleichzeitig, für die Feststoff-Abgabe zum Laborreaktor, von dem Förderteil 22 der Feststoff 40 zu den in der Offenstellung im wesentlichen deckungsgleichen Oeffnungen 31,37 und 33,38 transportiert.

Bei dem in Fig.2 dargestellten Ausführungsbeispiel ist die Drehbewegung durch den in der Oeffnung 38 der Bodenplatte 35 geführten Zapfen 34 der Drehblende 30 begrenzt, wobei die Drehgeschwindigkeit, die Ausbildung des Förderteils 22 und die Oeffnungen 31,33, und 37,38 so gewählt sind, dass eine bestimmte Feststoffmenge abgegeben werden kann. Die Teile 30,20,21 werden vorzugsweise nach jedem Zugabevorgang in die Grundstellung (nicht dargestellt) zurückgeführt.

Bei einem nicht dargestellten Ausführungsbeispiel (Drehblende 30 ohne Zapfen 34) besteht die Möglichkeit, bei konstanter Drehbewegung durch eine bestimmte Ansteuerung des Motors 15 eine fortlaufende, dosierte Feststoffzugabe zu erreichen.

Patentansprüche:

1. Vorrichtung (50) für die Zugabe von Feststoffen, insbesondere für die dosierte Zugabe rieselfähiger Feststoffe (40) in einen Laborreaktor, bestehend aus einem Behälter (10), einem koaxial darin angeordneten Verteilerorgan (20), das mit einem Förderteil (22) dicht oberhalb einer mit einer Austrittsöffnung versehenen Bodenplatte (35) angeordnet und mit einer Antriebswelle (17) wirkverbunden ist, dadurch gekennzeichnet, dass zwischen der Bodenplatte (35) und dem Förderteil (22) eine mit dem Verteilerorgan (20) drehfest gekoppelte Drehblende (30) angeordnet ist, dass die Bodenplatte (35) mindestens eine Austrittsöffnung (37,38) und die Drehblende (30) mindestens eine in der Schliessstellung versetzt dazu angeordnete Austrittsöffnung (31,33) aufweist, wobei die Drehblende (30) in bezug zu der Bodenplatte (35) derart in dem Behälter (10) drehbar ist, dass für den Durchtritt des Feststoffes (40) die einzelnen Austrittsöffnungen in der Offenstellung im wesentlichen deckungsgleich sind.

2. Vorrichtung nach Anspruch 1, dadurch gekennzeichnet, dass die Drehblende (30) zwei um 90° versetzt zueinander angeordnete, kreisausschnittartig ausgebildete Austrittsöffnungen (31,33) aufweist.

3. Vorrichtung nach Anspruch 1, dadurch gekennzeichnet, dass die Bodenplatte (35) drehfest in der Vorrichtung (50) angeordnet ist und zwei um 90° versetzt zueinander angeordnete, kreisausschnittartig ausgebildete Austrittsöffnungen (37,38) aufweist.

4. Vorrichtung nach Anspruch 2 und 3, dadurch gekennzeichnet, dass die in der Drehblende (30) und in der Bodenplatte (35) angeordneten Austrittsöffnungen (31,33 und 37,38) eine weitgehend gleiche Formgebung aufweisen.

5. Vorrichtung nach Anspruch 1, dadurch gekennzeichnet, dass für die Drehbewegungs-Begrenzung die Drehblende (30) mit einem Zapfen (34) in einer der Austrittsöffnungen (37,38) der Bodenplatte (35) geführt ist.

0234332

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US-A-3 157 313  (F. SARMENTO) <br> * Spalte 3, Zeilen 15-30; Spalte 5, Zeilen 41-47; Patentanspruch 1 * <br><br>--- | 1 | G 01 F   13/00 |
| Y,D | CH-A- 633 884  (P. LEHKY) <br> * Patentansprüche 1-5 * <br><br>--- | 1 | |
| A | US-A-1 559 905  (C. MOORMAN) <br> * Patentanspruch; Figuren 1-5 * <br><br>----- | 1 | |

RECHERCHIERTE SACHGEBIETE (Int. Cl.4)

G 01 F
B 01 J

Der vorliegende Recherchenbericht wurde für alle Patentansprüche erstellt.

| Recherchenort <br> DEN HAAG | Abschlußdatum der Recherche <br> 27-05-1987 | Prüfer <br> VAN DEN BULCKE E. |
|---|---|---|